# EUROPEAN PATENT APPLICATION

(11) **EP 2 172 942 A1**
(43) Date of publication of application: **07.04.2010**
(21) Application number: 08773095.8
(22) Date of filing: 03.07.2008
(51) Int. Cl.: G12B 17/04, G06F 1/16

(54) **A VISOR FOR A PORTABLE COMPUTER**

(30) Priority: 04.07.2007 CN 200710123587; 18.09.2007 CN 200710077195
(71) Applicant: Shenzhen Pchood Technology Co., Ltd., Guangdong 518000 (CN)
(72) Inventor: Luo, Jin, Luzhou Sichuan 646002 (CN)
(74) Representative: Stuttard, Garry Philip
(86) International application number: PCT/CN2008/071534
(87) International publication number: WO 2009/003419

(57) **Abstract**

A visor for a portable computer includes a top shield and two side shields. The shields are sheet and jointed to form a hood whose sides and top are close while bottom is open. The shape of the hood is suitable for a computer monitor. A fastener is provided on the hood for attaching the visor to the computer. The visor is adapted to be folded by changing joints manners of the shields so that packaging and transporting become convenient.

## Description

### Background of the Present Invention

### Field of Invention

The present invention relates to a visor of personal computer, and more particular to a visor for a portable computer, wherein the visor forms a light shield for blocking the unwanted light for the portable computer.

### Description of Related Arts

The environmental light and the diffused light normally project on the screen of a personal computer will disturb the visualization of the user and the color shown on the screen, so that the eye of the user may have the illusion of the incorrectly projected light therefrom. Using the visor for a personal or portable computer can effectively prevent the interference of the environmental light and the diffused light to the screen. The existing notebook or portable computer screen covers are usually customized in order to incorporate with each of the individual computer screens. Therefore, there has no generalized universal computer cover or visor for incorporating with most of the current portable computer screens.

### Summary of the Present Invention

An object of the present invention is to provide a visor for portable computer, which is generally able to incorporate with most of the existing computers with different screen sizes.

Accordingly, in order to accomplish the above object, the present invention provides a visor, preferably for portable computer, comprises a top shield and two side shields, i.e. the left and right shields, foldably extended from two side edges of the top shield respectively to form a hood with a light shielding cavity for a screen of said portable computer receiving therewithin. The top shield and the side shields are formed in sheet-like structure or a planer structure. The light shielding cavity has a top enclosing wall formed by the top shield, two side enclosing walls formed by the left and right shields respectively, and a bottom opening. The size and shape of the light shielding cavity of the hood matches with the size and shape of the screen for fitting the screen within the light shielding cavity. The visor further comprises means for coupling the top shield with the left and right shields to form the light shielding cavity, and means for retaining the screen of the portable computer within the light shielding cavity.

The present invention is able to block the environment light, which may be interference the performance of the computer screen of the portable computer, to avoid the environment light projected onto the screen directly to interfere the screen.

The invention may also be further modified as the following.

The left and right shields are folded and coupled at two side edges of the top shield respectively to form the light shielding cavity via the coupling means.

Therefore, the visor can be folded up for being conveniently wrapped and transported.

Accordingly, the structure of the coupling means is configured as one of the followings.

The coupling means comprises two foldable wings being foldably and integrally extended from the two side edges of the top shield respectively, a plurality of first fasteners provided at the foldable wings respectively, and a plurality of second fasteners provided at the left and right shields respectively and arranged to detachably couple with the first fasteners so as to detachably couple the top shield between the left and right shield, wherein the first and second fasteners are selected from the group consisting of hook and loop fasteners, and magnetic element;
or, the coupling means comprises two folding wings being foldably and integrally extended from two corresponding edges of the left and right shields respectively, a plurality of first fasteners provided at the foldable wings respectively, and a plurality of second fasteners provided at the two side edges of the top shield respectively and arranged to detachably couple with the first fasteners so as to detachably couple the top shield between the left and right shield, wherein the first and second fasteners are selected from the group consisting of hook and loop fasteners, and magnetic element;
or, the coupling means comprises a first zipper set provided between one of the side edges of the top shield and a corresponding edge of the left shield, and a second zipper set provided between another the side edge of the top shield and a corresponding edge of the right shield, wherein the top shield are detachably coupled between the left and right shield via the first and second zipper sets.

The retaining means of the visor is that:
The retaining means comprises a top folding wing integrally and foldably extended along a top edge of the top shield, a left folding wing integrally and foldably extended along an inner edge of the left shield, a right folding wing integrally and foldably extended along an inner edge of the right shield, a plurality of first fastening elements provided at the top folding wing, the left folding wing, and the right folding wing respectively, and a plurality of second fastening elements adapted for providing at a top periphery and two side peripheries of the screen of the portable computer at an outer side thereof, wherein the top folding wing, the left folding wing, and the right folding wing are adapted for detachably coupling at the top periphery and two side peripheries of the screen respectively via the first and second fastening elements to retain the top shield, and the left and right shield in position so as to retain the screen of the portable computer within the light shielding cavity, wherein the first and second fastening elements are selected from the group consisting of hook and loop fasteners, and magnetic element.

The visor further comprises a rear shield foldably and integrally extended from the top shield for folding at an outer side of the screen.

The rear shield comprises a rear-left shield, a rear-middle shield, and a rear-right shield, wherein the top shield comprises a top-left shield integrally and foldably extended from the rear-left shield, a top-middle shield integrally and foldably extended from the rear-middle shield, and a top-right shield integrally and foldably extended from the rear-right shield.

A plurality of first retainers are provided at the top-middle shield and a plurality of second retainers are provided at the top-left shield and the top-right shield respectively to detachably couple with the first retainers, such that the top-left shield and the top-right shield are detachably and adjustably coupled with the top-middle shield via the first and second retainers to adjust a distance between the top-left shield and the top-right shield, so as to selectively adjust a width of the light shielding cavity in responsive to the screen;

The first retainers are also provided at the rear-middle shield and the second retainers are also provided at the rear-left shield and the rear-right shield respectively to detachably couple with the retainers, such that the rear-left shield and the rear-right shield are detachably and adjustably coupled with the rear-middle shield via the first and second retainers to adjust a distance between the rear-left shield and the rear-right shield, so as to selectively adjust a width of the light shielding cavity in responsive to the screen.

Therefore, the width of the visor is adjustable in order to fit in variety of sizes of computer screens.

The first and second retainers are selected from the group consisting of hook and loop fasteners and magnetic elements, such that the top-left shield and the top-right shield are detachably and adjustably coupled with the top-middle shield via the first and second retainers to adjust the distance between the top-left shield and the top-right shield, while the rear-left shield and the rear-right shield are detachably and adjustably coupled with the rear-middle shield via the first and second retainers to adjust the distance between the rear-left shield and the rear-right shield.

The first and second retainers are a plurality of elastic fasteners provided at predetermined locations of the rear shield, wherein two of the elastic fasteners are inclinedly provided at upper left and upper right corners of the rear shield respectively, while another two of the elastic fasteners are inclinedly provided at bottom left and bottom right corners of the rear shield respectively, such that the elastic fasteners are adapted for binding at four corner portions of the screen.

The visor further comprises one or more parallel tear-off lines provided at bottom portions of the rear shield, the left shield, and the right shield, wherein the rear shield, the left shield, and the right shield are adapted to selectively tear off the bottom portions thereof along one of the tear-off lines to selectively adjust a length thereof with respect to a height of the screen.

The elastic fasteners are inclinedly provided at the bottom portion of the rear shield and are formed in pair that each pair of the elastic fasteners are located at the rear shield above the corresponding tear-off line so as to ensure two of the corresponding elastic fasteners in pair being located at the bottom left and right corners of the rear shield.

Accordingly, through the tear-off lines, the height of the light shielding cavity can be selective adjusted in responsive to the height of the screen.

The visor further comprises a rear shield extended from the top shield for folding at an outer side of the screen, wherein the left and right shield are foldably extended from two side edges of the rear shield respectively;

The rear shield is foldably extended from the top shield for folding at an outer side of the screen to enable the top shield being folded with respect to the rear shield on top of the screen.

The left and right shield are foldably extended from the rear shield respectively to enable the left and right shield being folded with respect to the rear shield at two sides of the screen.

The bottom shield is foldably extended from the rear shield to enable the bottom shield being folded with respect to the rear shield at a position that the bottom shield forms as the retention means for placing underneath the portable computer to retain the visor in position.

The rear shield has an accessing slot provided at a bottom portion of the rear shield and arranged in such a manner that when the rear shield is placed at the outer side of the screen, the accessing slot is aligned with a device port at a rear periphery of the portable computer.

A plurality of folding wings are provided along corresponding edges of the rear shield and the bottom shield respectively, wherein the accessing slot is formed at each of the folding wings to align with the device port at the rear periphery of the portable computer when the rear shield is placed at the outer side of the screen.

Therefore, when the visor is held with a relatively larger portable computer, the folding wings at corresponding edges of the rear shield and the bottom shield can adjust the height of the visor. The accessing slot is able to communicate with the connection port of the computer therethrough.

Each of the left and right shields has a round edge that when the left and right shields are folded, two side openings are formed at the light shielding cavity for aligning with two device ports at two side peripheries of the portable computer respectively.

Therefore, the side openings of the visor enable to communicate with the heat dissipating hole and device ports at two sides of the computer.

The top shield is foldably extended between the left and right shields, such that the left and right shields are adapted to foldably overlap with the top shield.

A plurality of foldable wings are provided at the top shield, and the left and right shields, wherein a plurality of first fasteners are provided at the foldable wings and a plurality of second fasteners are arranged for providing at a periphery of the screen at an outer side thereof, wherein the first and second fasteners are detachably coupled with each other for detachably coupling the top shield at a top periphery of the screen and for detachably coupling the left and right shields at two side peripheries of the screen respectively so as to form the light shielding cavity to encircle the screen, wherein the first and second fasteners are selected from the group consisting of hook and loop fasteners and magnetic elements.

The top shield comprises a top-left shield and a top-right shield coupling with each other via first and second fasteners, wherein the structure of the top shield is configured as one of the followings.

The first fastener provided at an outer side of the top-left shield and the second fastener provided at an inner side of the top-right shield, wherein the first and second fasteners are detachably coupled with each other to overlappedly and detachably couple the top-left shield with the top-right shield, wherein the first and second fasteners are selected from the group consisting of hook and loop fasteners and magnetic elements;
or, the first fastener provided at an inner side of the top-left shield and the second fastener provided at an outer side of the top-right shield, wherein the first and second fasteners are detachably coupled with each other to overlappedly and detachably couple the top-left shield with the top-right shield, wherein the first and second fasteners are selected from the group consisting of hook and loop fasteners and magnetic elements.

The first fastener is arranged for providing at the outer side of the screen at a bottom portion thereof.

Therefore, the first fastener at the outer side of the screen can detachably couple with the top shield, the left shield, and the right shield when the top shield, the left shield, and the right shield are folded to overlap on the outer side of the screen.

The visor further comprises a rear shield integrally and foldably extended from the top shield to enable the rear shield being folded at the outer side of the screen, wherein the left and right shield are foldably coupled at two side edges of the rear shield to form the light shielding cavity.

The left and right shields are foldably coupled with the rear shield via a plurality of foldable wings, and first and second fasteners, wherein the structure of the foldable wings is configured as one of the followings.

The foldable wings foldably and integrally extended from two side edges of the rear shield, the first fasteners being provided at the foldable wings, the second fasteners being provided at two side edges of the left and right shields respectively and detachably coupled with the first fasteners to detachably couple the rear shield between the left and right shields, wherein the first and second fasteners are selected from the group consisting of hook and loop fasteners and magnetic elements;
or, the foldable wings foldably and integrally extended from two side edges of the left and right shields respectively, the first fasteners being provided at the foldable wings, the second fasteners being provided at two side edges of the rear shield and detachably coupled with the first fasteners to detachably couple the rear shield between the left and right shields, wherein the first and second fasteners are selected from the group consisting of hook and loop fasteners and magnetic elements.

The retaining means is configured as one of the followings.

The bottom shield foldably extended from the rear shield that the bottom shield is adapted to foldably overlap with the rear shield, wherein the bottom shield is adapted for being folded at a position that the bottom shield is placed underneath the portable computer to retain the rear shield, the top shield, and the left and right shield in position;
or, one or more elastic fasteners being inclinedly provided at each corner of the rear shield for binding at a corner portion of the screen;
or, a first retainer provided at an inner side of the rear shield while a second retainer adapted for providing at an outer side of the screen, wherein the first retainer is detachably coupled with the second retainer for detachably retaining the rear shield at the screen, wherein the first and second retainers are selected from the group consisting of hook and loop fasteners and magnetic elements.

The top shield is foldably extended from other shields via a folding means by forming an indent groove therealong to enable the top shield being folded, or forming a door hinge structure at the top shield to enable the top shield being folded.

The visor further comprises an accessing slot provided at the top shield and an accessing slot cover having the size and shape geographically matching the accessing slot for covering the accessing slot.

The visor has a light non-reflective layer formed at an outer side thereof, wherein the light non-reflective layer can be a black fur fiber layer integrally provided at the outer side, or a black fur fiber layer coated at the outer side.

The visor further comprises a solar energy collecting arrangement for collecting solar energy, wherein the solar energy collecting arrangement comprises a plurality of solar energy collectors provided at an outer side of the visor, and a power connector electrically extended from the solar energy collectors for electrically connecting to the portable computer.

Therefore, when using the portable computer outdoors, the solar energy collecting arrangement can collect solar energy to prolong the operating time of the electronic device, such as the computer, mobile phone, or digital camera, by charging the device through the solar energy collecting arrangement.

The batteries of the solar energy collectors are made of material selected from the group consisting of amorphous silicon, single crystal silicon, or polysilicon.

These and other objectives, features, and advantages of the present invention will become apparent from the following detailed description, the accompanying drawings, and the appended claims.

### Brief Description of the Drawings

FIG. 1 is a 2-dimensional top expanded view of a visor according to a first preferred embodiment of the present invention.
FIG. 2 is a side view of the visor according to the first preferred embodiment of the present invention, illustrating the visor coupling at a peripheral edge of a computer screen of a portable computer.
FIG. 3 is a 2-dimensional top expanded view of a visor according to a second preferred embodiment of the present invention.
FIG. 4 is a side view of the visor according to the second preferred embodiment of the present invention, illustrating the visor coupling with the portable computer at a normal usage position.
FIG. 5 is a rear view of the visor according to the second preferred embodiment of the present invention, illustrating the visor coupling with the portable computer at a normal usage position.
FIG. 6 is another side view of the visor according to the second preferred embodiment of the present invention, illustrating the elevated top portion of the visor coupling with the portable computer.
FIG. 7 is a rear view of the visor according to the second preferred embodiment of the present invention, illustrating the elevated top portion of the visor coupling with the portable computer.
FIG. 8 is a top view of the expanded visor with two folded side portions thereof according to the second preferred embodiment of the present invention.
FIG. 9 is a 2-dimensional top expanded view of a visor according to a third preferred embodiment of the present invention.
FIG. 10 is a side view of the visor according to the third preferred embodiment of the present invention, illustrating the visor coupling with the portable computer.
FIG. 11 is a 2-dimensional top expanded view of a visor according to a fourth preferred embodiment of the present invention.
FIG. 12 is a side view of the visor according to the fourth preferred embodiment of the present invention, illustrating the visor coupling with the portable computer.
FIG. 13 is a 2-dimensional top expanded view of a visor according to a fifth preferred embodiment of the present invention.
FIG. 14 is a top view of the visor according to the fifth preferred embodiment of the present invention, illustrating the visor coupling with the portable computer.
FIG. 15 is a rear view of the visor according to the fifth preferred embodiment of the present invention, illustrating the visor coupling with the portable computer.
FIG. 16 is a top view of the expanded visor with two folded side portions thereof according to the fifth preferred embodiment of the present invention.
FIG. 17 is a top view of the visor with two folded side portions and folded top portions overlapping therewith according to the fifth preferred embodiment of the present invention.
FIG. 18 is a top view of the expanded visor according to a sixth preferred embodiment of the present invention.
FIG. 19 is a top view of the expanded visor with two folded side portions thereof according to the sixth preferred embodiment of the present invention.
FIG. 20 is a top view of the visor with two folded side portions and folded top portions overlapping therewith according to the sixth preferred embodiment of the present invention.
FIG. 21 is a front view of the visor according to the sixth preferred embodiment of the present invention, illustrating the visor coupling with the portable computer.
FIG. 22 is a top view of the expanded visor according to a seventh preferred embodiment of the present invention.
FIG. 23 is a top view of the visor according to the seventh preferred embodiment of the present invention, illustrating the top portion being folded to overlap with the computer screen.
FIG. 24 is a top view of the visor according to the seventh preferred embodiment of the present invention, illustrating the top portion and the two side portions being folded to overlap with the computer screen at a storage position.
FIG. 25 is a top expanded view of a visor according to an eighth preferred embodiment of the present invention.
FIG. 26 is a bottom expanded view of a visor according to the above eighth preferred embodiment of the present invention.
FIG. 27 is a front view of the visor according to the above eighth preferred embodiment of the present invention, illustrating the visor coupling with the portable computer.
FIG. 28 is a top expanded view of a visor according to a ninth preferred embodiment of the present invention.
FIG. 29 is a bottom expanded view of a visor according to the ninth preferred embodiment of the present invention.
FIG. 30 is a front view of the visor according to the above ninth preferred embodiment of the present invention, illustrating the visor coupling with the portable computer.
FIG. 31 is a front view of the visor according to a tenth preferred embodiment of the present invention.
FIG. 32 is a side view of the visor according to the tenth preferred embodiment of the present invention, illustrating the visor coupling with the portable computer at the normal usage position.
FIG. 33 is a front view of the visor according to an eleventh preferred embodiment of the present invention.
FIG. 34 is another front view of the visor according to the eleventh preferred embodiment of the present invention, illustrating the visor coupling with the portable computer.

### Detailed Description of the Preferred Embodiment

One skilled in the art will understand that the embodiment of the present invention as shown in the drawings and described below is exemplary only and not intended to be limiting.

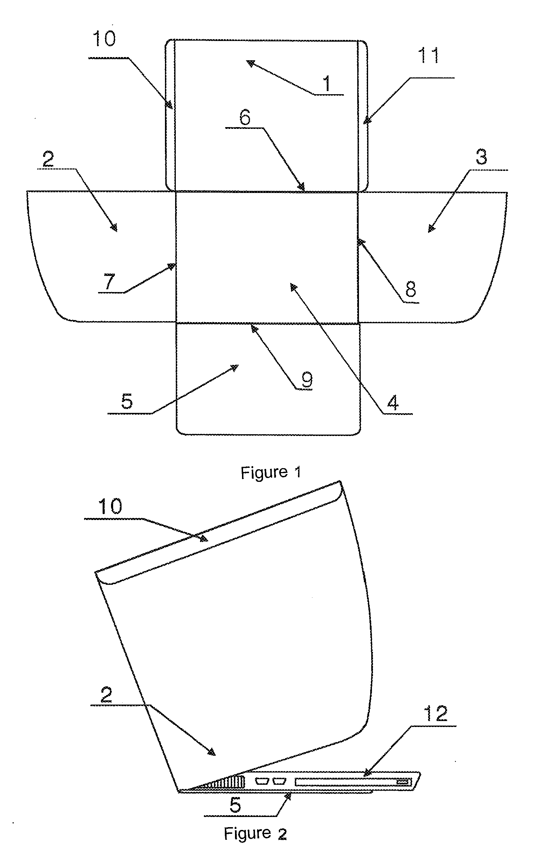

Referring to Fig. 1 of the drawings, a visor for a portable computer 12 according to a first preferred embodiment of the present invention is illustrated, wherein the visor, which forms in a one-piece foldable structure, comprises a top shield 1, a left shield 2, and a right shield 3 defining a light shielding cavity therewithin. The visor further comprises a rear shield 4 integrally extended from the top shield 1 and defined a first indent groove 6 along a foldably connecting edge between the top shield 1 and the rear shield 4, such that the top shield 1 is adapted to fold with respect to the rear shield 4 along the first indent groove 6. It is appreciated that the top shield 1 and the rear shield 4 can be foldably extended via any folding structure such as a door hinge structure. Two side edges of the rear shield 4 are foldably and integrally extended to the left and right shields, 2, 3 respectively, wherein two second indent grooves 7, 8 are defined along the two side edges of the rear shield 4. Therefore, the left shield 2 is adapted to fold with respect to the rear shield 4 along the second indent groove 7 and the right shield 3 are adapted to fold with respect to the rear shield 4 along the second indent groove 8 to form the light shielding cavity. The visor further comprises a bottom shield 5 foldably and integrally extended from the rear shield 4 and defined a third indent groove 9 along a foldably connecting edge between the rear shield 4 and the bottom shield 5, such that the bottom shield 5 is adapted to fold with respect to the rear shield 4 along the third indent groove 9. The visor further comprises two foldable wings 10, 11 foldably and integrally extended from two side edges of the top shield 1 respectively, a first fastener provided at an inner side of each of the foldable wings 10, 11, and a second fastener provided at an outer side of each of the left and right shields 2, 3, wherein when the first fasteners are detachably fastened with the second fasteners respectively, the foldable wings 10, 11 are detachably coupled with the left and right shield 2, 3 to retain the top shield 1 between the left and right shields 2, 3 in position so as to form the light shielding cavity. Preferably, the first and second fasteners are hook and loop fasteners (Velcro). It is appreciated that the first fastener can be provided at the outer side of each of the foldable wings 10, 11 while the second fastener provided at the inner side of each of the left and right shields 2, 3, such that when the first fasteners are selectively and adjustably fastened with the second fasteners, the top shield 1 is folded to couple with the left and right shields 2, 3 to selectively adjust the size of the light shielding cavity. It is worth mentioning that the first and second fasteners can be magnetic elements instead of Velcro.

Fig. 2 illustrates the visor of the present invention incorporating with the portable computer 12. The bottom shield 4 is placed underneath the portable computer such that the weight of the portable computer is applied on the bottom shield 4 to position the light shielding cavity and to retain the visor in position so as to prevent any unwanted movement of the visor with respect to the portable computer 12. The rear shield 4 is upwardly folded at the rear side of the screen of the portable computer 12 to adjustably match with the inclination angle of the screen while the top shield 1, the left shield 2, and the right shield 3 are folded to encircle with the screen of the portable computer along the top side, the left side, and the right side of the screen respectively such that the screen is shielded within the light shielding cavity of the visor. In addition, the first and second fasteners are detachably fastened with each other to retain the top shield 1, the left shield 2, and the right shield 3 in position.

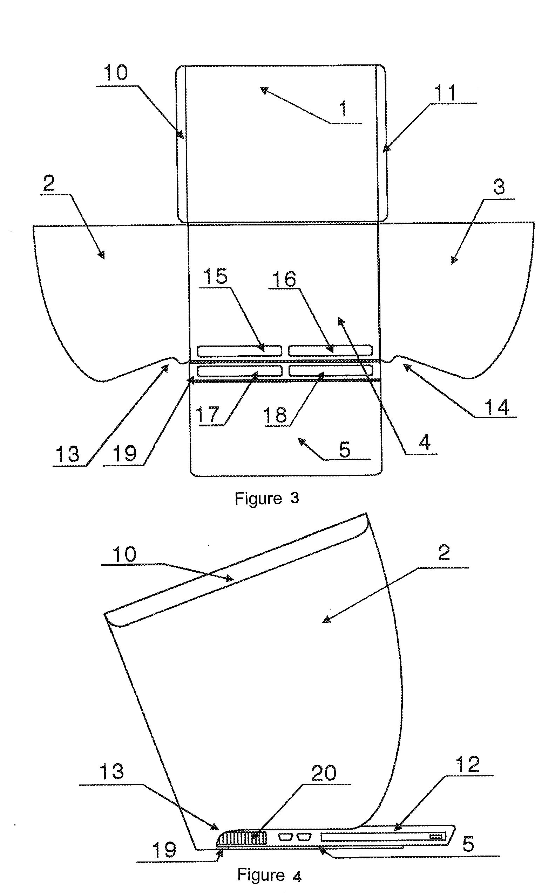

Referring to Fig. 3 of the drawings, a visor according to a second preferred embodiment of the present invention illustrates a modification of the first embodiment, wherein the visor further comprises two indented notches 13, 14 formed at the bottom edges of the left and right shields 2, 3 respectively, such that when the top shield 1 is coupled between the left and right shields 2, 3 to form the light shielding cavity, the indented notches 13, 14 form two side openings for aligning with two side peripheries of the portable computer 12. Accordingly, the two side openings are geographically matched with the side peripheries of the portable computer 12 such that the device ports at the side peripheries of the portable computer 12 can be accessed when the screen is shield within the light shielding cavity. In other words, the device ports of the portable computer 12 will not be covered when the top shield 1 is coupled between the left and right shields 2, 3 such that the device ports can be accessed without disassembling or unfolding the visor of the present invention. The visor further has one or more wire connecting slots 15, 16 provided at the bottom portion of the rear shield 4, wherein each of the wire connecting slots 15, 16 have the shape and size matching with the rear connecting ports located at the rear periphery of the portable computer 12, such that when the rear shield 4 is folded at the rear side of the screen, the wire connecting slots 15, 16 are aligned with the rear connecting ports so as to enable the rear connecting ports being accessed without disassembling or unfolding the visor of the present invention. The visor further comprises a folding edge 19 provided at the bottom shield 5 at a position parallel to the third indent groove 9, wherein the rear shield 4 can be selectively folded along one of the folding edge 19 and the third indent groove 9 to match with the height of the screen. In addition, the visor further has one or more supplemental wire connecting slots 17, 18 provided at the bottom shield 5 at a position between the folding edge 19 and the third indent groove 9 such that when the rear shield 4 is folded along the folding edge 19, the supplemental wire connecting slots 17, 18 are aligned with the rear connecting ports of the portable computer 12.

Fig. 4 illustrates the visor of the present invention incorporating with the portable computer 12. When the visor is folded to shield the portable computer 12 at a position that the rear shield 4 is folded along the third indent groove 9, the bottom shield 4 is placed underneath the portable computer 12, such that the folding edge 19 is also located underneath the portable computer 12. Accordingly, the indented notch 13 at the left shield 2 is geographically aligned with the heat dissipating port 20 located at the side periphery of the portable computer 12 for enabling the heat from the heat dissipating port 20 escaping out of the light shielding cavity through the indented notch 13.

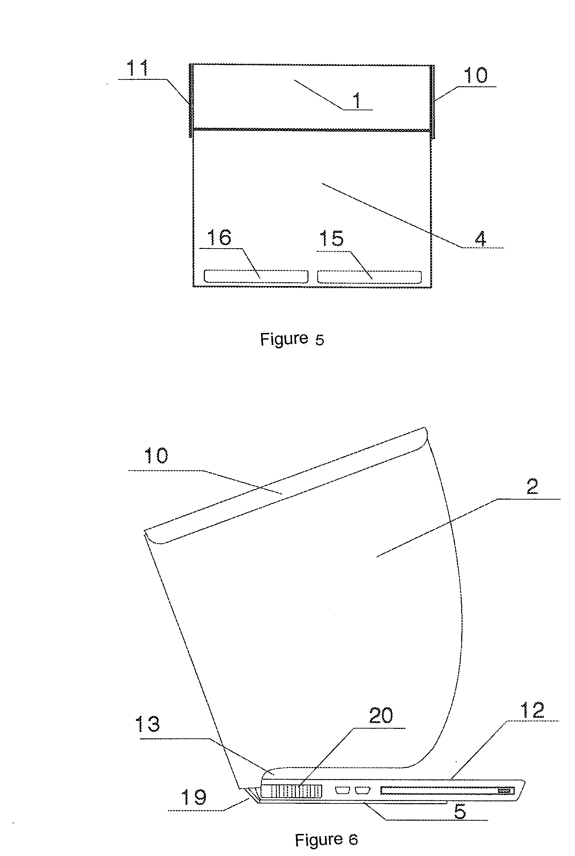

As shown in Fig. 5, the folding edge 19 and the bottom shield 5 are placed underneath the portable computer at a position that the wire connecting slots 15, 16 have the shape and size matching with the rear connecting ports located at the rear periphery of the portable computer 12, and the wire connecting slots 15, 16 are aligned with the rear connecting ports of the portable computer 12.

Fig. 6 illustrates the rear shield 4 is folded along both third indent groove 9 and the folding edge 19, wherein the bottom shield 5 is placed underneath the portable computer at a position that the folding edge 19 is rearwardly moved to locate at the rear bottom edge of the portable computer such that the rear shield 4 can be more flexible to adjustably fold for matching with the inclination angle of the screen of the portable computer.

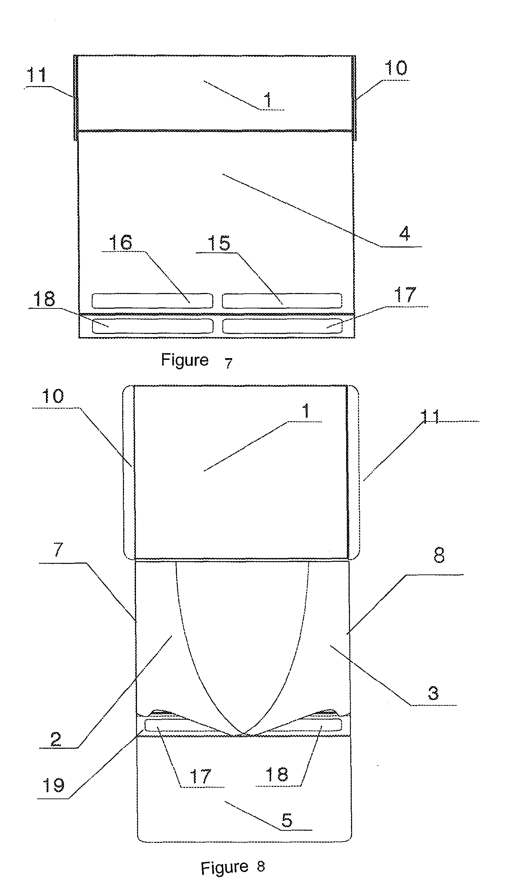

As shown in Fig. 7, the visor is folded at a position that the rear shield 4 is folded along the folding edge 19, wherein the bottom shield 5 is placed underneath the portable computer at a position the supplemental wire connecting slots 17, 18 have the shape and size matching with the rear connecting ports located at the rear periphery of the portable computer 12 and the wire connecting slots 15, 16 are aligned with the rear connecting ports of the portable computer 12.

As shown in Fig. 8, the left and right shields 2, 3 are folded and overlapped on the rear shield 4 via the second indented slots 7, 8 respectively.

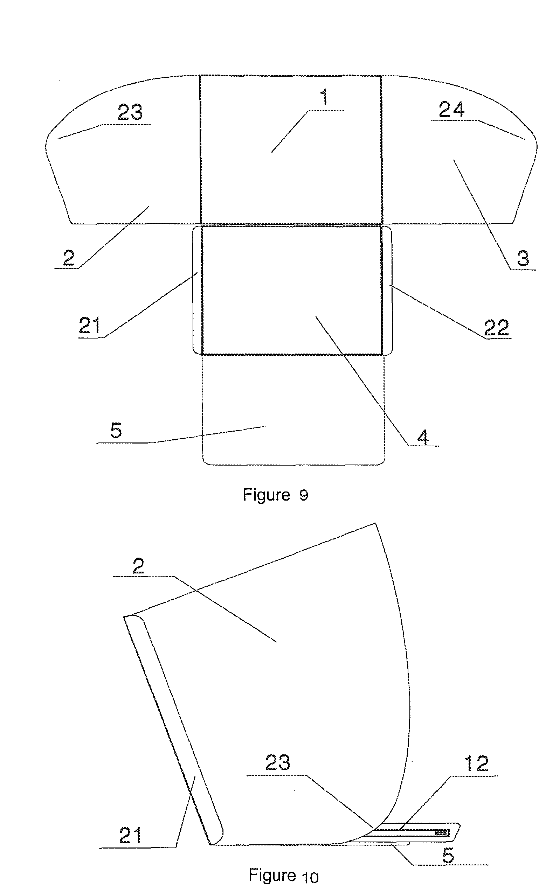

Referring to Fig. 9 of the drawings, a visor according to a third preferred embodiment of the present invention illustrates another alternative mode of the first embodiment, wherein the visor, which forms in a one-piece foldable structure, comprises a top shield 1, a left shield 2, and a right shield 3 defining a light shielding cavity therewithin. The visor further comprises a rear shield 4 integrally extended from the top shield 1 and defined a first indent groove along a foldably connecting edge between the top shield 1 and the rear shield 4, such that the top shield 1 is adapted to fold with respect to the rear shield 4 along the first indent groove. Two side edges of the top shield 1 are foldably and integrally extended to the left and right shields, 2, 3 respectively, wherein two second indent grooves are defined along the two side edges of the top shield 1. Therefore, the left shield 2 is adapted to fold with respect to the top shield 1 along the second indent grooves and the right shield 3 are adapted to fold with respect to the top shield 1 along another second indent groove to form the light shielding cavity. The visor further comprises a bottom shield 5 foldably and integrally extended from the rear shield 4 and defined a third indent groove along a foldably connecting edge between the rear shield 4 and the bottom shield 5, such that the bottom shield 5 is adapted to fold with respect to the rear shield 4 along the third indent groove. The visor further comprises two foldable wings 21, 22 foldably and integrally extended from two side edges of the rear shield 4 respectively, a first fastener provided at an inner side of each of the foldable wings 21, 22, and a second fastener provided at an outer side of each of the left and right shields 2, 3, wherein when the first fasteners are detachably fastened with the second fasteners respectively, the foldable wings 21, 22 are detachably coupled with the left and right shield 2, 3 to retain the top shield 1 between the left and right shields 2, 3 in position so as to form the light shielding cavity. Preferably, the first and second fasteners are preferably two magnetic elements that the first and second fasteners are made of magnetically attracting material. Two rounded corners 23, 24 are formed at the outer edge of the left and right shields 2, 3 respectively.

As shown in Fig. 10, the bottom shield 5 is placed underneath the portable computer 12 to retain the visor in position, wherein the foldable wings 21, 22 are coupled with the left and right shields 2, 3 via the first and second fasteners to form the light shielding cavity to encircle the screen therewithin for blocking the unwanted environment light projecting on the screen.

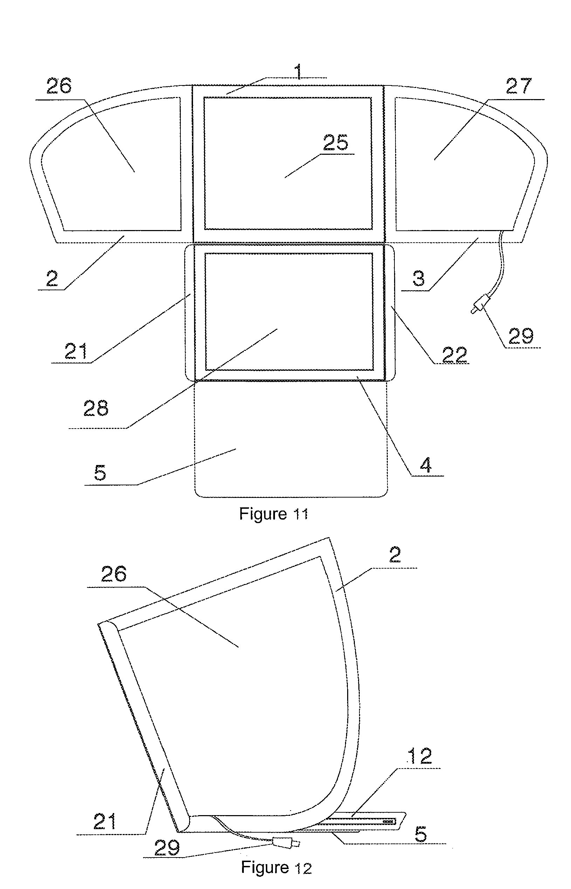

Referring to Fig. 11 of the drawings, a visor according to a fourth preferred embodiment of the present invention illustrates another alternative mode of the third embodiment, wherein the visor has similar structure and function as the third preferred embodiment. The visor further comprises a solar energy collecting arrangement for collecting solar energy, wherein the solar energy collecting arrangement comprises a plurality of solar energy collectors 25, 26, 27, 28 provided at the outer sides of the top shield 1, the left shield 2, the right shield 3, and the rear shield 4 respectively, and a power connector 29 extended from one of the left and right shields 2, 3, wherein the power connector 29 is electrically connected to the solar energy collectors 25, 26, 27, 28 for supplying electrical energy to the portable computer when the solar energy collectors 25, 26, 27, 28 collect the solar energy and convert the solar energy into electrical energy.

As shown in Fig. 12, the bottom shield 5 is placed underneath the portable computer 12 to retain the visor in position, wherein the foldable wings 21, 22 are coupled with the left and right shields 2, 3 via the first and second fasteners to form the light shielding cavity to encircle the screen therewithin for blocking the unwanted environment light projecting on the screen.

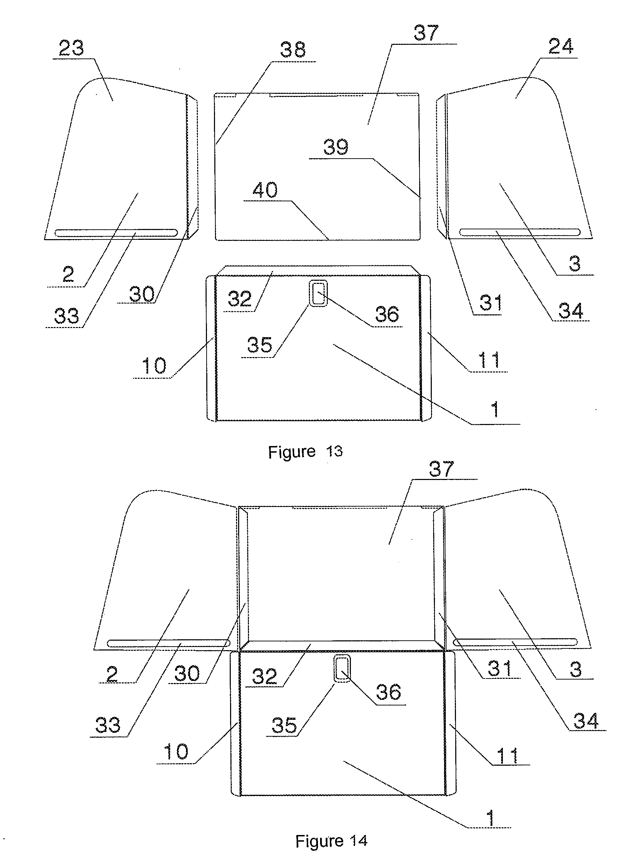

Referring to Fig. 13 of the drawings, a visor according to a fifth preferred embodiment of the present invention having similar structure of the above embodiments is illustrated, wherein the top shield 1 comprises two side foldable wings 10, 11 integrally and foldably extended along the two side edges thereof and a top foldable wing 32 integrally and foldably extended along the top edge of the top shield 1. The left shield 2 comprises a left folding wing 30 integrally and foldably extended along an inner edge thereof, and a first fastening element 33 provided at a bottom portion of the left shield 2 at the inner side thereof. The right shield 3 comprises a right folding wing 31 integrally and foldably extended along an inner edge thereof, and another first fastening element 34 provided at a bottom portion of the right shield 3 at the inner side thereof. A plurality of second fastening elements are arranged for providing at a top periphery 40 and two side peripheries 38, 39 of the screen 37 of the portable computer at the outer side thereof respectively. Preferably, the first and second fastening elements are hook and loop fasteners or magnetic elements. Two rounded corners 23, 24 are formed at the outer corners of the left and right shields 2, 3 respectively. At least one accessing slot 35 is preferably provided at the top shield 1 of the visor, wherein an accessing slot cover 36 having the size and shape geographically matching the accessing slot 35 may be further provided for covering the accessing slot 35.

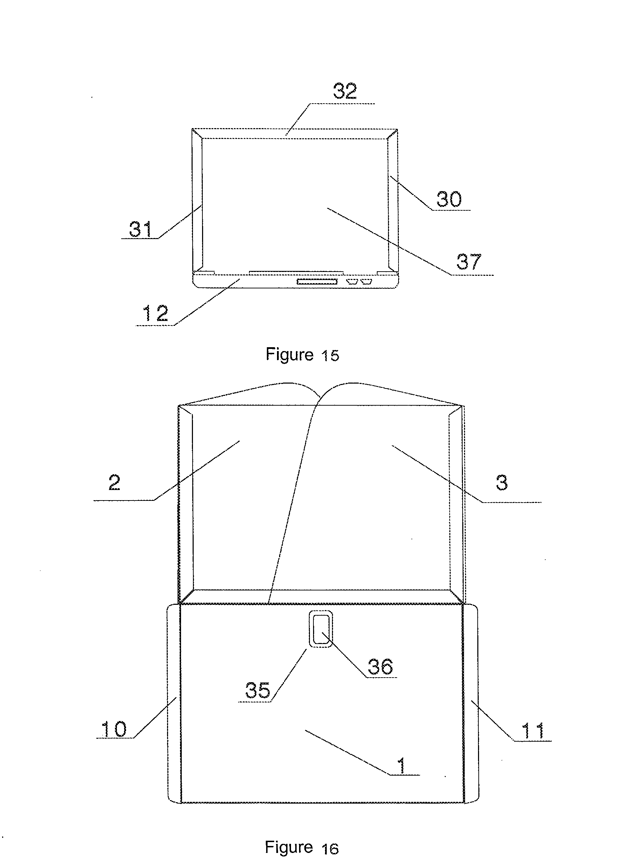

As shown in Figs. 14 and 15, the top foldable wing 32 is detachably coupled at the top periphery 40 of the screen while the left folding wing 30 and the right folding wing 31 are detachably coupled at the side peripheries 38, 39 of the screen 37 respectively.

Accordingly, as shown in Fig. 16, the left and right shields 2, 3 of the visor of can be folded to overlap with the left and right folding wing 30, 31 respectively.

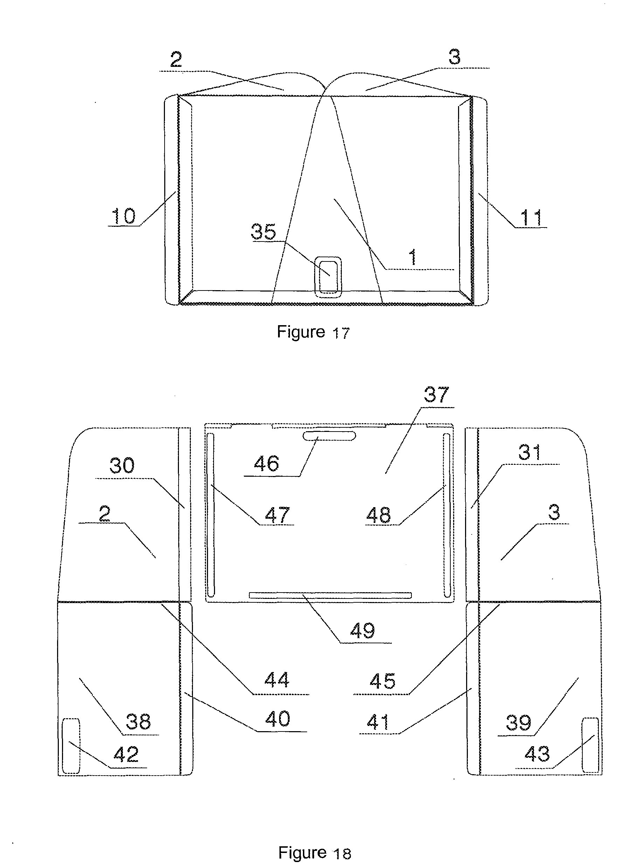

As shown in Fig. 17, the top shield 1 of the visor can be folded to overlap with the top folding wing 32.

Referring to Fig. 18 of the drawings, the top shield 1, which is constructed to have two parts, comprises a top-left shield 38 integrally and foldably extended from the left shield 2 along a left indent groove 44, and a top-right shield 39 integrally and foldably extended from the right shield 3 along a right indent groove 45, such that the top-left shield 38 and the top-right shield 39 are adapted to fold with respect to the left and right shields 2, 3 along the left indent groove 44 and the right indent groove 45 respectively. The visor further comprises a plurality of folding wings 30, 31, 40, 41 integrally and foldably extended along the inner edges of the left shield 2, the right shield 3, the top-left shield 38, and the top-right shield 39 respectively, a plurality of first fasteners provided at the inner sides of the folding wings 30, 31, 40, 41 respectively, and a plurality of second fasteners 46, 47, 48, 49 arranged for providing at four peripheries of the screen 37 at the rear side thereof such that the folding wings 30, 31, 40, 41 can be detachably coupled at the peripheries of the screen 37 via the first and second fasteners. Preferably, the first and second fasteners are magnetic elements respectively. In addition, the visor further comprises two couplers 42, 43 provided at the top-left shield 38 and the top-right shield 39 respectively to detachably couple the top-left shield 38 with the top-right shield 39 in an overlapping manner. The two couplers 42, 43 are preferably two magnetic elements.

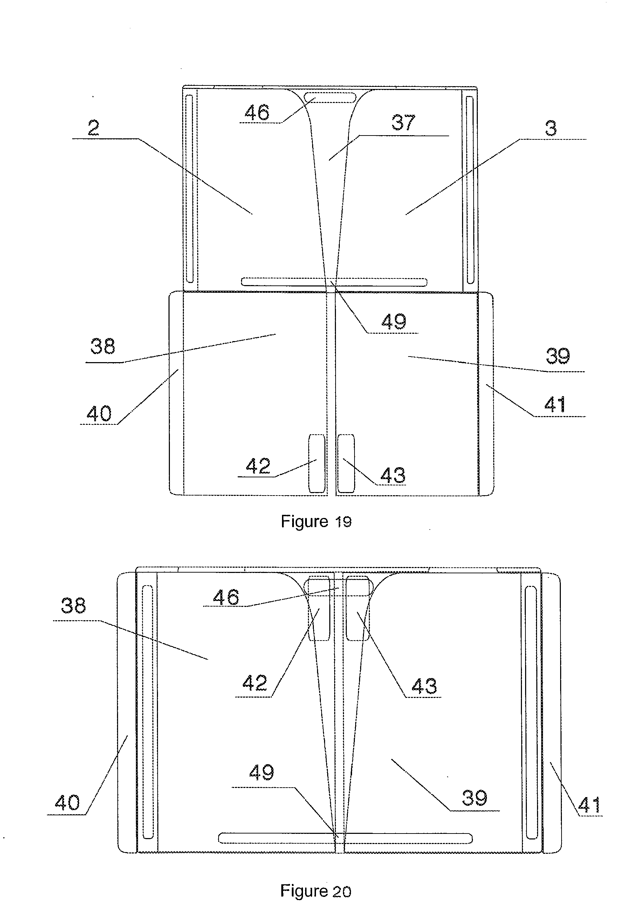

As shown in Fig. 19, the left and right shields 2, 3 are adapted to overlappedly fold at the rear side of the screen 37 via the folding wings 30, 31.

As shown in Fig. 20, the top-left shield 38 and the top-right shield 39 are adapted to overlappedly fold at the rear side of the screen 37 along the left and right indent grooves 44, 45 to form a relatively more compact side for storage and portable purpose. The second fastener 46 at the top periphery of the screen 37 at the rear side thereof is detachably coupled with the couplers 42, 43 by means of magnetically engagement to retain the top shield 1 at the portable computer.

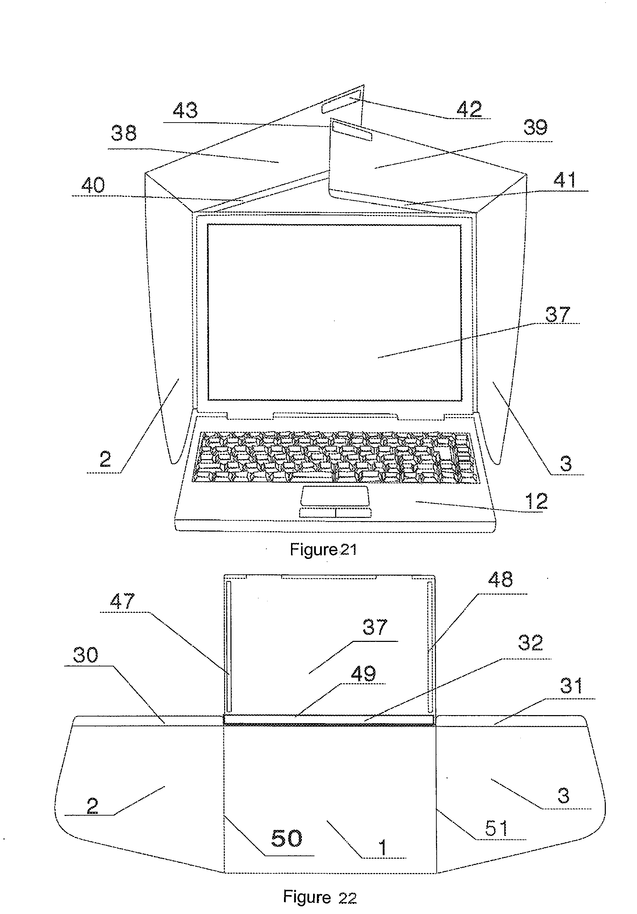

As shown in Fig. 21, when the folding wing 30 is detachably coupled at the rear side of the screen 37 via the first and second fasteners 47, the left shield 2 can be retained its position and can fold forwardly at the left periphery of the screen 37. When the folding wing 31 is detachably coupled at the rear side of the screen 37 via the first and second fasteners 48, the right shield 3 can be retained its position and can fold forwardly at the right periphery of the screen 37. Then, by folding the top-left shield 38 and the top-right shield 39 towards each other, the top-left shield 38 and the top-right shield 39 are overlapped and coupled with each other via the two couplers 42, 43.

Referring to Fig. 22 of the drawings, the visor according to a seventh preferred embodiment illustrates another alternative mode of the present invention, wherein the left and right shields 2, 3 are integrally and foldably extended from two side edges of the top shield 1 respectively, wherein two indent grooves 50, 51 are defined along the two side edges of the top shield 1 respectively, such that the left and right shields 2, 3 are adapted to fold with respect to the top shield 1 along the indent grooves 50, 51. The visor further comprises a plurality of folding wings 30, 31, 32 extended along the bottom edges of the left and right shields 2, 3 and the rear edge of the top shield 1 respectively, a plurality of first fasteners provided at the folding wings 30, 31, 32 respectively, and a plurality of second fasteners 47, 48, 49 arranged for providing at the top periphery and two side peripheries of the screen respectively, such that the folding wings 30, 31, 32 are adapted to detachably couple at the side peripheries and the top periphery of the screen respectively via the first and second fasteners 47, 48, 49. Preferably, the first and second fasteners 47, 48, 49 are hook and loop fasteners respectively.

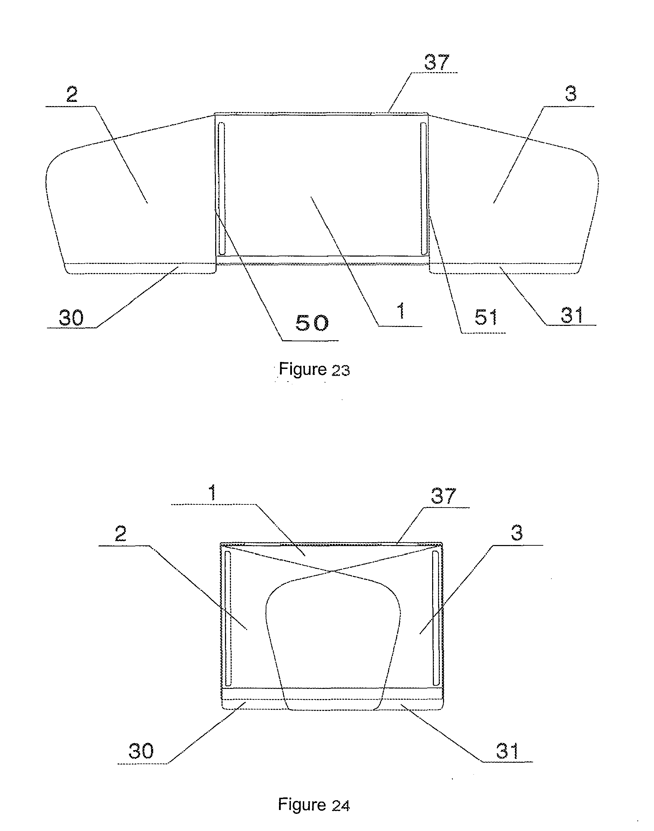

As shown in Fig. 23 of the drawing, the folding wing 32 are detachably coupled at the top periphery of the screen 37 at the rear side thereof, such that the top shield 1 is folded along the folding wing 32 to overlap with the rear side of the screen 37.

As shown in Fig. 24, the folding wings 30, 31 are coupled at the top periphery of the screen 37 at the rear side thereof, such that the left and right shields 2, 3 are folded along the indent groove 50, 51 to overlap with the rear side of the top shield 1.

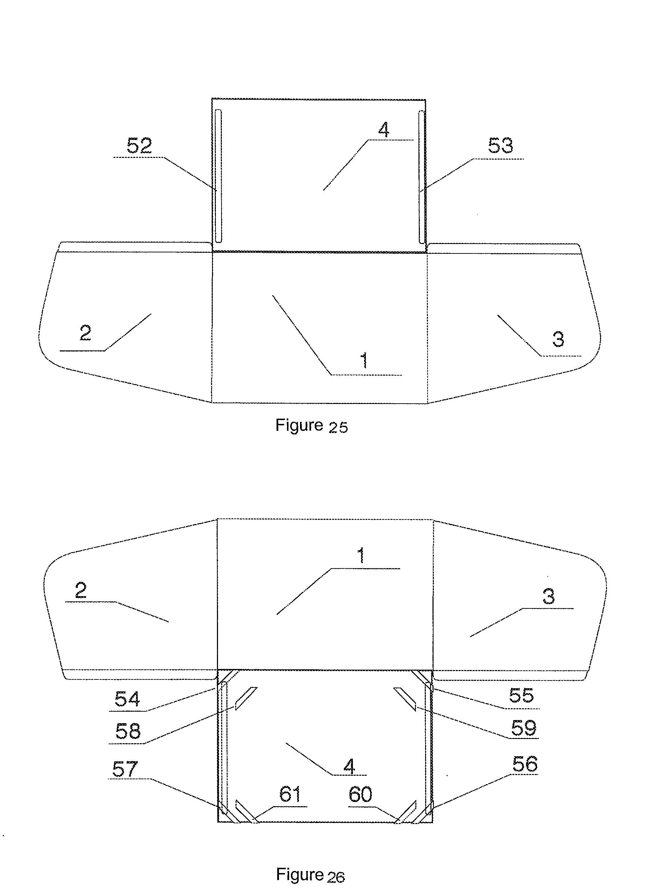

Referring to Fig. 25 of the drawings, a visor of an eighth preferred embodiment is illustrated, wherein the rear shield 4 is integrally and foldably extended from the bottom edge of the top shield 1 to define an indent groove along the bottom edge of the top shield 1 such that the top shield 1 can be folded with respect to the rear shield 4 along the indent groove. Two folding wings are integrally and foldably extended from the left and right shields 2, 3. The visor further comprises a plurality of first fasteners provided at the folding wings and a plurality of second fasteners 52, 53 provided at two side portions of the rear shield 4 respectively, wherein the first and second fasteners are preferably hook and loop fasteners.

As shown in Fig. 26, a plurality of elastic fasteners are inclinedly provided at the inner side of the rear shield 4 at a position adjacent to the four corner portions thereof. The elastic fasteners are grouped into a first elastic fastener set 54, 55, 56, 57, and a second elastic fastener set 58, 59, 60, 61, so that the first and second elastic fastener sets at the rear shield 4 are able to adjustably hold different sizes of the portable computers at the corner portions thereof.

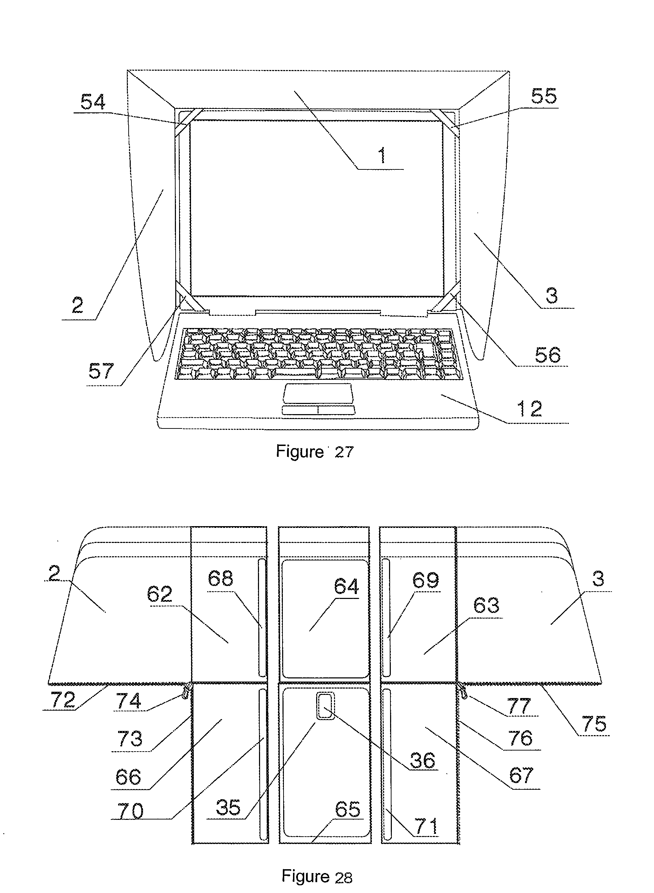

As further shown in Fig. 27, when the folding wings are detachably coupled with the rear shield 4 via the first and second fasteners, the rear shield 4 is coupled and retained between the left and right shields 2, 3 to form the light shielding cavity with the top shield 1. The first elastic fastener set 54, 55, 56, 57 is bound at four corner portions of the screen by means of elastic force to retain the rear shield 4 at the rear side of the screen so as to reinforce the screen being received within the light shielding cavity.

Referring to Fig. 28 of the drawings, the visor according to a ninth preferred embodiment of the present invention is illustrated, wherein the rear shield is integrally and foldably extended from the left and right shields 2, 3 to define an indent groove between the rear shield and each of the left and right shields 2, 3, so as to enable the left and right shields 2, 3 being folded with respect to the rear shield. The top shield is integrally and foldably extended from the rear shield to define another indent groove between the rear shield and the top shield so as to enable the top shield being folded with respect to the rear shield. The rear shield comprises a rear-left shield 62 integrally and foldably extended from the left shield 2, a rear-middle shield 64, and a rear-right shield 63 integrally and foldably extended from the right shield 3. The top shield comprises a top-left shield 66 integrally and foldably extended from the rear-left shield 62, a top-middle shield 65 integrally and foldably extended from the rear-middle shield 64, and a top-right shield 67 integrally and foldably extended from the rear-right shield 63. Two parallel tear-off lines are provided at the bottom portions of the rear shield, the left shield, and the right shield, wherein the rear shield, the left shield, and the right shield can be selectively torn off the bottom portions thereof along one of the tear-off lines to selectively adjust the height of each of the rear shield, the left shield, and the right shield for matching with the height of the screen. A first zipper set comprises two first zippers 72, 73 provided along the two corresponding edges of the left shield 2 and the top shield respectively, and a first zipper head 74 detachably coupling the two first zippers 72, 73 with each other to detachably couple the left shield 2 with the top shield. A second zipper set comprises two second zippers 75, 76 provided along the two corresponding edges of the right shield 3 and the top shield respectively and a second zipper head 77 detachably coupling the two second zippers 75, 76 with each other to detachably couple the right shield 3 with the top shield. In other words, the first and second zipper sets are arranged to detachably couple the top shield between the left and right shields 2, 3 to form the light shielding cavity. At least one accessing slot 35 is preferably provided at the top shield of the visor, wherein an accessing slot cover 36 having the size and shape geographically matching the accessing slot 35 may be further provided for covering the accessing slot 35. The visor further comprises a plurality of first retainers provided at the rear-middle shield 64 and the top-middle shield 65 respectively, and a plurality of second retainers 70, 71, 68, 69, provided at the top-left shield 66, the top-right shield 67, the rear-left shield 62, and the rear-right shield 63 respectively, wherein the first and second retainers can be hook and loop fasteners or magnetic elements. Therefore, the top-left shield 66 and the top-right shield 67 can be detachably and adjustably coupled with the top-middle shield 65 via the first and second retainers to adjust a distance between the top-left shield 66 and the top-right shield 67. The rear-left shield 62 and the rear-right shield 63 can be detachably and adjustably coupled with the rear-middle shield 64 via the first and second retainers to adjust a distance between the rear-left shield 62 and the rear-right shield 63. In other words, the width of the light shielding cavity can be selectively adjusted with respect to the width of the screen. It is appreciated that the top-middle shield 65 can be coupled between the top-left shield 66 and the top-right shield 67 by means of tongue-groove engagement structure or clip-on engagement structure, while the rear-middle shield 64 can be coupled between the rear-left shield 62 and the rear-right shield 63 by means of tongue-groove engagement structure or clip-on engagement structure, such that the width of the light shielding cavity can be selectively adjusted with respect to the width of the screen.

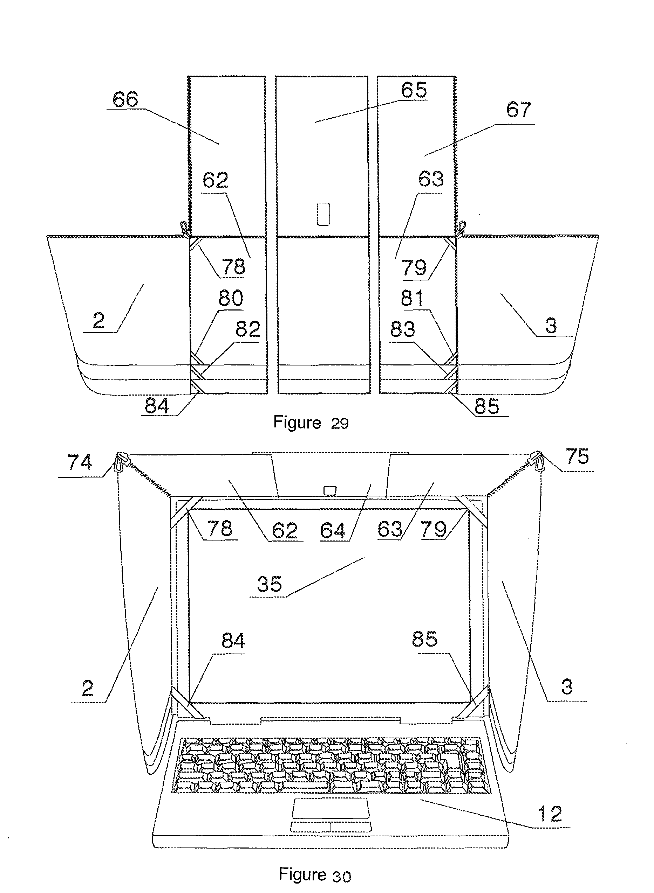

As shown in Fig. 29, a plurality of elastic fasteners, which are the alternative of the first and second retainers, provided at predetermined locations of the rear shield, wherein two of the elastic fasteners 78, 79 are inclinedly provided at the upper left and upper right corners of the rear shield respectively. Two parallel tear-off lines are provided at the bottom portion of the rear shield, the left shield, and the right shield. Three of the elastic fasteners 80, 82, 84 are inclinedly and parallelly provided at the bottom left corner of the rear shield. Three of the elastic fasteners 81, 83, 85 inclinedly and parallelly provided at the bottom right corner of the rear shield. Accordingly, the six elastic fasteners form in pair at the bottom left and right corners of the rear shield at a position that each pair is located above the corresponding tear-off line, such that the bottom portion of the rear shield can be selectively torn off along each of the tear-off lines. Therefore, the rear shield can be selectively adjusted its length with respect to the height of the screen to ensure two corresponding elastic fasteners in pair being located at the bottom left and right corners of the rear shield.

As further shown in Fig. 30 of the drawings, the top-left shield 66, the top-middle shield 65, and the top-right shield 67 of the top shield are folded from the rear-left shield 62, the rear-middle shield 64, and the rear-right shield 63 of the rear shield respectively, wherein the top-left shield 66 and the top-right shield 67 are detachably and adjustably coupled with the top-middle shield 65 via the first and second fasteners while the rear-left shield 62 and the rear-right shield 63 are detachably and adjustably coupled with the rear-middle shield 64 via the first and second fasteners to form the light shielding cavity to shield the screen therewithin. The elastic fasteners 78, 79, 84, 85 are bound at the four corner portions of the screen to retain the screen within the light shielding cavity.

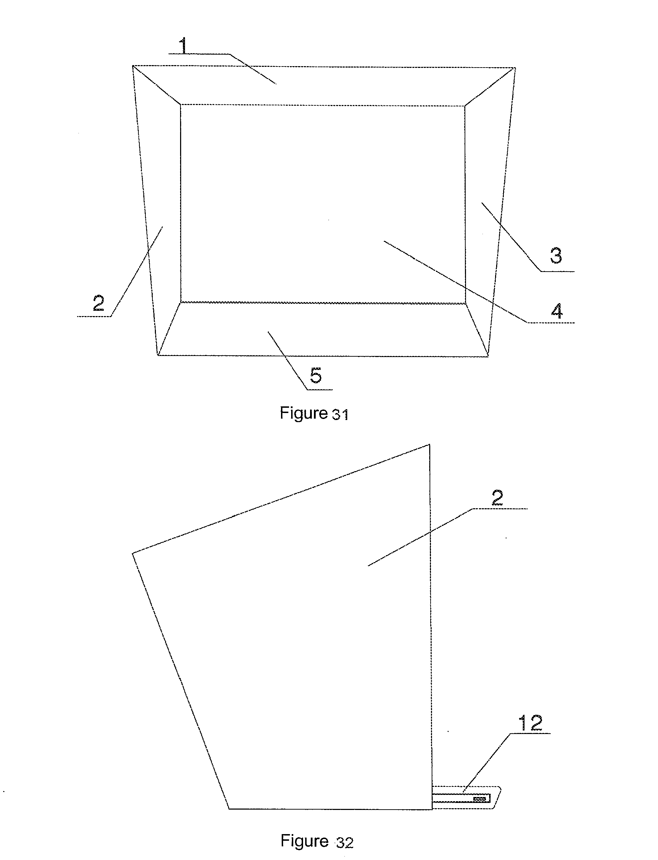

Referring to Fig. 31 of the drawings, a visor according to a tenth embodiment of the present invention is illustrated, wherein the top shield 1, the rear shield 4, the bottom shield 5, and the left and right shields 2, 3 are integrally extended with each other edge-to-edge to form a box shaped light shielding cavity for receiving the portable computer therewithin.

As further shown in Fig. 32, the bottom shield 5 of the visor of the tenth preferred embodiment is placed underneath the bottom body 12 of the portable computer to retain the visor in position that the screen of the portable computer is located within the light shielding cavity.

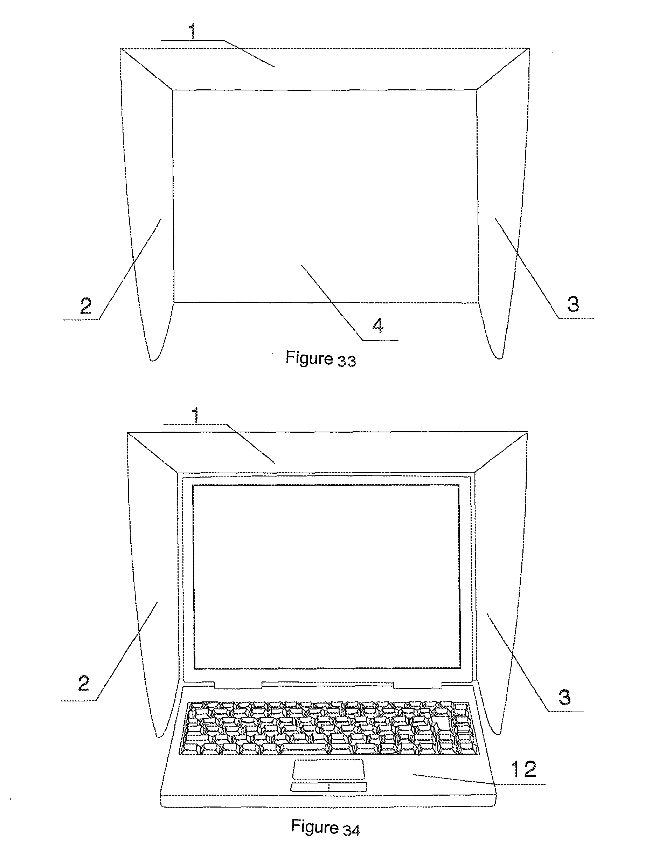

Referring to Fig. 33 of the drawings, a visor according to an eleventh embodiment of the present invention is illustrated, wherein the top shield 1, the rear shield 4, and the left and right shields 2, 3 are integrally extended with each other edge-to-edge to form a box shaped light shielding cavity for receiving the portable computer therewithin. In other words, the bottom shield is omitted.

As further shown in Fig. 34, the visor is supported by the screen of the portable computer at a position that the screen of the portable computer is located within the light shielding cavity.

It will thus be seen that the objects of the present invention have been fully and effectively accomplished. The embodiments have been shown and described for the purposes of illustrating the functional and structural principles of the present invention and is subject to change without departure from such principles. Therefore, this invention includes all modifications encompassed within the spirit and scope of the following claims.

## Claims

1. A visor for a portable computer, comprising a top shield, and left and right shields extending between said top shield to form a light shielding cavity for a screen of said portable computer receiving therewithin, wherein said top shield, said left shield, and said right shield are formed in a planar structure, wherein said light shielding cavity has a top enclosing wall formed by said top shield, two side enclosing walls formed by said left and right shields respectively, and a bottom opening, wherein a size and shape of said light shielding cavity matches with a size and shape of said screen for fitting said screen within said light shielding cavity, wherein said visor further comprises means for coupling said top shield with said left and right shields to form said light shielding cavity, and means for retaining said screen of said portable computer within said light shielding cavity.

2. The visor, as recited in claim 1, wherein said left and right shields are folded and coupled at two side edges of said top shield respectively to form said light shielding cavity via said coupling means.

3. The visor, as recited in claim 2, wherein the structure of said coupling means is selected from the group consisting of:
wherein said coupling means comprises two foldable wings being foldably and integrally extended from said two side edges of said top shield respectively, a plurality of first fasteners provided at said foldable wings respectively, and a plurality of second fasteners provided at said left and right shields respectively and arranged to detachably couple with said first fasteners so as to detachably couple said top shield between said left and right shield, wherein said first and second fasteners are selected from the group consisting of hook and loop fasteners, and magnetic element;
wherein said coupling means comprises two folding wings being foldably and integrally extended from two corresponding edges of said left and right shields respectively, a plurality of first fasteners provided at said foldable wings respectively, and a plurality of second fasteners provided at said two side edges of said top shield respectively and arranged to detachably couple with said first fasteners so as to detachably couple said top shield between said left and right shield, wherein said first and second fasteners are selected from the group consisting of hook and loop fasteners, and magnetic element; and
wherein said coupling means comprises a first zipper set provided between one of said side edges of said top shield and a corresponding edge of said left shield, and a second zipper set provided between another said side edge of said top shield and a corresponding edge of said right shield, wherein said top shield are detachably coupled between said left and right shield via said first and second zipper sets.

4. The visor, as recited in claim 3, wherein said retaining means comprises a top folding wing integrally and foldably extended along a top edge of said top shield, a left folding wing integrally and foldably extended along an inner edge of said left shield, a right folding wing integrally and foldably extended along an inner edge of said right shield, a plurality of first fastening elements provided at said top folding wing, said left folding wing, and said right folding wing respectively, and a plurality of second fastening elements adapted for providing at a top periphery and two side peripheries of said screen of said portable computer at an outer side thereof, wherein said top folding wing, said left folding wing, and said right folding wing are adapted for detachably coupling at said top periphery and two side peripheries of said screen respectively via said first and second fastening elements to retain said top shield, and said left and right shield in position so as to retain said screen of said portable computer within said light shielding cavity, wherein said first and second fastening elements are selected from the group consisting of hook and loop fasteners, and magnetic element.

5. The visor, as recited in claim 3, further comprising a rear shield foldably and integrally extended from said top shield for folding at an outer side of said screen;
wherein said rear shield comprises a rear-left shield, a rear-middle shield, and a rear-right shield, wherein said top shield comprises a top-left shield integrally and foldably extended from said rear-left shield, a top-middle shield integrally and foldably extended from said rear-middle shield, and a top-right shield integrally and foldably extended from said rear-right shield;
wherein a plurality of first retainers are provided at said top-middle shield and a plurality of second retainers are provided at said top-left shield and said top-right shield respectively to detachably couple with said first retainers, such that said top-left shield and said top-right shield are detachably and adjustably coupled with said top-middle shield via said first and second retainers to adjust a distance between said top-left shield and said top-right shield, so as to selectively adjust a width of said light shielding cavity in responsive to said screen;
wherein said first retainers are also provided at said rear-middle shield and said second retainers are also provided at said rear-left shield and said rear-right shield respectively to detachably couple with said retainers, such that said rear-left shield and said rear-right shield are detachably and adjustably coupled with said rear-middle shield via said first and second retainers to adjust a distance between said rear-left shield and said rear-right shield, so as to selectively adjust a width of said light shielding cavity in responsive to said screen.

6. The visor, as recited in claim 5, wherein said first and second retainers are selected from the group consisting of hook and loop fasteners and magnetic elements, such that said top-left shield and said top-right shield are detachably and adjustably coupled with said top-middle shield via said first and second retainers to adjust said distance between said top-left shield and said top-right shield, while said rear-left shield and said rear-right shield are detachably and adjustably coupled with said rear-middle shield via said first and second retainers to adjust said distance between said rear-left shield and said rear-right shield.

7. The visor, as recited in claim 5, wherein said first and second retainers are a plurality of elastic fasteners provided at predetermined locations of said rear shield,
wherein two of said elastic fasteners are inclinedly provided at upper left and upper right corners of said rear shield respectively, while another two of said elastic fasteners are inclinedly provided at bottom left and bottom right corners of said rear shield respectively, such that said elastic fasteners are adapted for binding at four corner portions of said screen.

8. The visor, as recited in claim 7, further comprises one or more parallel tear-off lines provided at bottom portions of said rear shield, said left shield, and said right shield, wherein said rear shield, said left shield, and said right shield are adapted to selectively tear off said bottom portions thereof along one of said tear-off lines to selectively adjust a length thereof with respect to a height of said screen.

9. The visor, as recited in claim 8, wherein said elastic fasteners are inclinedly provided at said bottom portion of said rear shield and are formed in pair that each pair of said elastic fasteners are located at said rear shield above said corresponding tear-off line so as to ensure two of said corresponding elastic fasteners in pair being located at said bottom left and right corners of said rear shield.

10. The visor, as recited in claim 1, 2, or 3, further comprising a rear shield extended from said top shield for folding at an outer side of said screen, wherein said left and right shield are foldably extended from two side edges of said rear shield respectively;
wherein said rear shield is foldably extended from said top shield for folding at an outer side of said screen to enable said top shield being folded with respect to said rear shield on top of said screen;
wherein said left and right shield are foldably extended from said rear shield respectively to enable said left and right shield being folded with respect to said rear shield at two sides of said screen;
wherein a bottom shield is foldably extended from said rear shield to enable said bottom shield being folded with respect to said rear shield at a position that said bottom shield forms as said retention means for placing underneath said portable computer to retain said visor in position.

11. The visor, as recited in claim 10, wherein said rear shield has an accessing slot provided at a bottom portion of said rear shield and arranged in such a manner that when said rear shield is placed at said outer side of said screen, said accessing slot is aligned with a device port at a rear periphery of said portable computer.

12. The visor, as recited in claim 11, wherein a plurality of folding wings are provided along corresponding edges of said rear shield and said bottom shield respectively, wherein said accessing slot is formed at each of said folding wings to align with said device port at said rear periphery of said portable computer when said rear shield is placed at said outer side of said screen.

13. The visor, as recited in claim 1 or 3, wherein each of said left and right shields has a round edge that when said left and right shields are folded, two side openings are formed at said light shielding cavity for aligning with two device ports at two side peripheries of said portable computer respectively.

14. The visor, as recited in claim 1, wherein said top shield is foldably extended between said left and right shields, such that said left and right shields are adapted to foldably overlap with said top shield.

15. The visor, as recited in claim 14, wherein a plurality of foldable wings are provided at said top shield, and said left and right shields, wherein a plurality of first fasteners are provided at said foldable wings and a plurality of second fasteners are arranged for providing at a periphery of said screen at an outer side thereof, wherein said first and second fasteners are detachably coupled with each other for detachably coupling said top shield at a top periphery of said screen and for detachably coupling said left and right shields at two side peripheries of said screen respectively so as to form said light shielding cavity to encircle said screen, wherein said first and second fasteners are selected from the group consisting of hook and loop fasteners and magnetic elements.

16. The visor, as recited in claim 14, wherein said top shield comprises a top-left shield and a top-right shield coupling with each other via first and second fasteners,
wherein the structure of said top shield is selected from the group consisting of:
said first fastener provided at an outer side of said top-left shield and said second fastener provided at an inner side of said top-right shield, wherein said first and second fasteners are detachably coupled with each other to overlappedly and detachably couple said top-left shield with said top-right shield, wherein said first and second fasteners are selected from the group consisting of hook and loop fasteners and magnetic elements; and
said first fastener provided at an inner side of said top-left shield and said second fastener provided at an outer side of said top-right shield, wherein said first and second fasteners are detachably coupled with each other to overlappedly and detachably couple said top-left shield with said top-right shield, wherein said first and second fasteners are selected from the group consisting of hook and loop fasteners and magnetic elements.

17. The visor, as recited in claim 16, wherein said first fastener is arranged for providing at said outer side of said screen at a bottom portion thereof to detachably couple with said top shield, said left shield, and said right shield when said top shield, said left shield, and said right shield are folded to overlap on said outer side of said screen.

18. The visor, as recited in claim 14, further comprising a rear shield integrally and foldably extended from said top shield to enable said rear shield being folded at said outer side of said screen, wherein said left and right shield are foldably coupled at two side edges of said rear shield to form said light shielding cavity.

19. The visor, as recited in claim 18, wherein said left and right shields are foldably coupled with said rear shield via a plurality of foldable wings, and first and second fasteners, wherein the structure of said foldable wings is selected from the group consisting of:
said foldable wings foldably and integrally extended from two side edges of said rear shield, said first fasteners being provided at said foldable wings, said second fasteners being provided at two side edges of said left and right shields respectively and detachably coupled with said first fasteners to detachably couple said rear shield between said left and right shields, wherein said first and second fasteners are selected from the group consisting of hook and loop fasteners and magnetic elements; and
said foldable wings foldably and integrally extended from two side edges of said left and right shields respectively, said first fasteners being provided at said foldable wings, said second fasteners being provided at two side edges of said rear shield and detachably coupled with said first fasteners to detachably couple said rear shield between said left and right shields, wherein said first and second fasteners are selected from the group consisting of hook and loop fasteners and magnetic elements.

20. The visor, as recited in claim 19, wherein said retaining means is selected from the group consisting of:
a bottom shield foldably extended from said rear shield that said bottom shield is adapted to foldably overlap with said rear shield, wherein said bottom shield is adapted for being folded at a position that said bottom shield is placed underneath said portable computer to retain said rear shield, said top shield, and said left and right shield in position;
one or more elastic fasteners being inclinedly provided at each corner of said rear shield for binding at a corner portion of said screen; and
a first retainer provided at an inner side of said rear shield while a second retainer adapted for providing at an outer side of said screen, wherein said first retainer is detachably coupled with said second retainer for detachably retaining said rear shield at said screen, wherein said first and second retainers are selected from the group consisting of hook and loop fasteners and magnetic elements.

21. The visor, as recited in claim claims 5, 10, 14, 18, or 20, wherein said top shield is foldably extended from other shields via a folding means selected from the group consisting of forming an indent groove therealong to enable said top shield being folded, and forming a door hinge structure at said top shield to enable said top shield being folded.

22. The visor, as recited in claim 1, further comprising an accessing slot provided at said top shield and an accessing slot cover having the size and shape geographically matching said accessing slot for covering said accessing slot.

23. The visor, as recited in claim 1, which has a light non-reflective layer formed at an outer side thereof, wherein said light non-reflective layer is selected from the group consisting of a black fur fiber layer integrally provided at said outer side, and a black fur fiber layer coated at said outer side.

24. The visor, as recited in claim 1, further comprising a solar energy collecting arrangement for collecting solar energy, wherein said solar energy collecting arrangement comprises a plurality of solar energy collectors provided at an outer side of said visor, and a power connector electrically extended from said solar energy collectors for electrically connecting to said portable computer.

25. The visor, as recited in claim 24, wherein batteries of said solar energy collectors are made of material selected from the group consisting of amorphous silicon, single crystal silicon, or polysilicon.
